# NEUE EUROPÄISCHE PATENTSCHRIFT

(11) **EP 1 181 611 B2**
(45) Veröffentlichungstag und Bekanntmachung des Hinweises auf die Entscheidung über den Einspruch: **20.10.2010**
(45) Hinweis auf die Patenterteilung: 01.03.2006
(21) Anmeldenummer: 00935059.6
(22) Anmeldetag: 18.05.2000
(51) Int. Cl.: G02B 21/16

(54) **SCANNENDE ANORDNUNG, VORZUGSWEISE ZUR ERFASSUNG VON FLUORESZENZLICHT**
SCANNING DEVICE, ESPECIALLY FOR DETECTING FLUORESCENT LIGHT
DISPOSITIF DE BALAYAGE SERVANT DE PREFERENCE A DETECTER UNE LUMIERE FLUORESCENTE

(30) Priorität: 19.05.1999 DE 19923822
(43) Veröffentlichungstag der Anmeldung: 27.02.2002
(60) Teilanmeldung: 03013895.2
(73) Patentinhaber: CARL ZEISS JENA GmbH, 07745 Jena (DE)
(72) Erfinder: SCHMIDT, Stefan, 24159 KielD-07745 Jena (DE)
(86) Internationale Anmeldenummer: PCT/EP2000/004492
(87) Internationale Veröffentlichungsnummer: WO 2000/072077

(56) Entgegenhaltungen:
- WO- -96//18205
- WO-A-96/18205
- DE- - 4 239 710
- DE-A- 3 742 806
- DE-A- 19 630 322
- DE-C2- 4 341 462
- JP- - 10 096 862
- US- - 5 108 179
- US- - 5 329 461
- US-A- 5 796 112

## Beschreibung

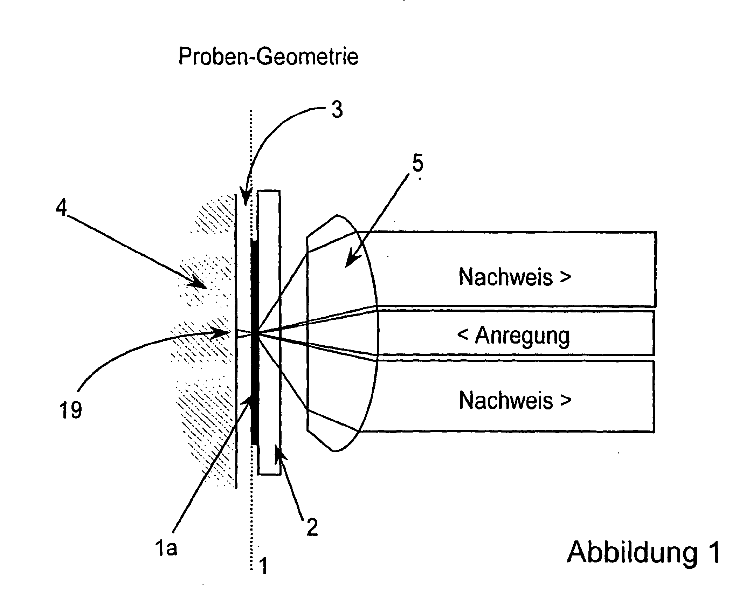

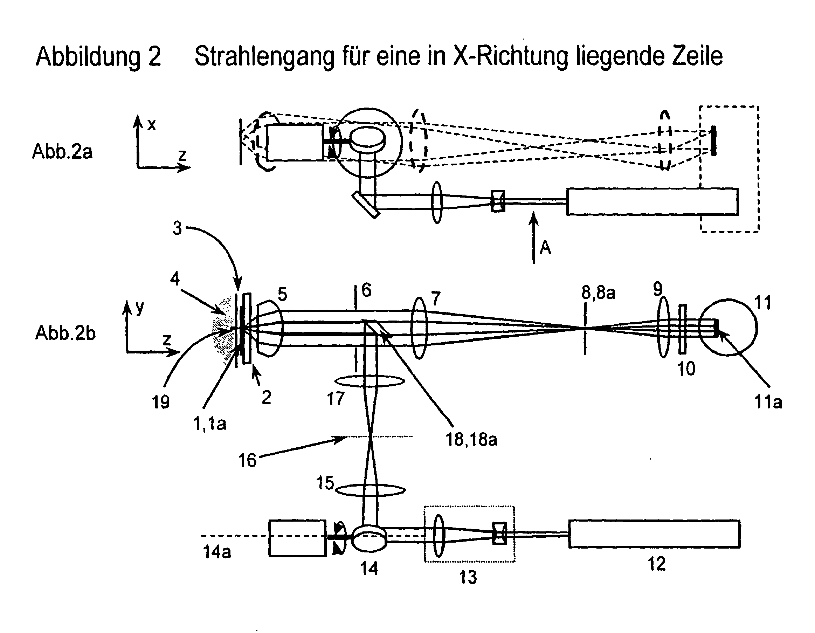

In DE-A- 3742806 wird ein Laser Scanning Mikroskop beschrieben, bei dem eine Modifikation gemäß Fig.2 dahingehend erfolgt, daß ausgedehnte Probenbereiche dargestellt werden sollen.
Zu diesem Zweck wird ein Übersichtsobjektiv 112 in den Strahlengang eingesetzt, das von einer Fremdlichtabschirmung 129 umgeben ist, die verhindert, daß Umgebungslicht in den unter der Probe liegenden Kondensor 114 einfällt (Spalte 4 Zeile 22 ff).
Durch eine verspiegelung der Abdeckung wird die Nachweisempfindlichkeit erhöht, um das beleuchtungsseitig von der Probe emittierte Fluoreszenzlicht von der Probe in Richtung des Kondensors zu reflektieren.

In WO-A-96/18205 wird eine scannende Anordnung zur Erfassung von Fluoreszenzlicht einer beleuchteten Probe beschrieben, wobei das Anregungslicht über mindestens einen Spiegel und ein Objektiv und einen in der Eintrittspupille des Objektives angeordneten Spiegel auf die Probe gelangt und das Fluoreszenzlicht an dem Spiegel vorbei über eine Apertur in Richtung eines Detektors gelangt.

### Abb.1:

Die Erfindung betrifft vorzugsweise die Erfassung und Messung der Fluoreszenz einer dünnen, einige 100nm dicken Schicht (1a) von farbstoffmarkierten Molekülen auf einem Glassubstrat (2)
Ziel ist es, die Fluoreszenzeffizienz in Abhängigkeit vom lateralen Ort in der Schicht (1a) quantitativ zu erfassen.

Damit die dünne, optisch aktive Schicht (1a) vor oder während der optischen Beobachtung chemischen Prozessen unterworfen werden kann liegt sie auf der Innenseite eines mit Flüssigkeit, zum Beispiel einer wässrigen Lösung,gefüllten Kanals (3).
Ein solcher Prozeß ist beispielsweise die Einfärbung der Schicht (1a) mit einer Farbstofflösung.

Der Kanal (3) wird durch das Substrat und eine auschnitthaft dargestellte Kanalrückwand (4) gebildet. Die Kanalrückwand (4) kann aus unterschiedlichen Materialien bestehen. Häufig wird Kunststoff verwendet, der bei Beleuchtung zur Fluoreszenz angeregt wird. Die Emission von der Kanalrückwand stört dann die optische Beobachtung.

Ebenfalls störend wirken sich die Rückreflektion beziehungsweise die Rückstreuung von Anregungslicht in das Objektiv (5) aus. Rückreflektion beziehungsweise Rückstreuung finden neben der Kanalrückwand auch an der Substratoberseite und der Substratunterseite statt.

Bei dem beschriebenen Gerät erfolgt die Beobachtung und die Anregung mit einem Objektiv (5) durch das Glassubstrat (2) hindurch. Der optische Aufbau des Gerätes ist so ausgelegt, daß die Beobachtung durch störendes Licht nicht verfälscht wird. Insbesondere wird durch den optischen Aufbau des Gerätes verhindert, daß das oben beschriebene Fluoreszenzlicht der Kanalrückwand (4) oder gestreutes beziehungsweise zurückreflektiertes Anregungslicht auf die Detektorfläche (11a) des Gerätes fällt.
Abb.2 und Abb.3:

Ein Objektiv (5) dient zum Fokussieren des kollimierten Anregungslichts auf die Probe (aktive Schicht (la)). Das Objektiv (5) dient auch dazu das von der Probe emittierte Licht zu sammeln.
Eine Blendenanordnung (18) befindet sich in der Nähe der Pupillenebene (6). Die Blendenanordnung (18) beinhaltet einen Spiegel zur Einspiegelung des Anregungslichts.
Das Projektiv(7) bildet zusammen mit dem Objektiv(5) die Objektebene in die nachweisseitige Zwischenbildebene (8) ab.
Eine Detektoroptik (9) dient zur homogenen Beleuchtung des Detektors (11) und eine Aufweitungsoptik (13) zum Aufweiten des Laserstrahls.
Das Scanobjektiv (15) überführt die Ablenkung des Laserstrahls in eine lineare Bewegung des Anregungsflecks Die Tubusoptik (17) im Anregungskanal bildet zusammen mit dem Objektiv (5) die anregungsseitige Zwischenbildebene (16) in die Objektebene (1) ab.
Eine Autofokuseinheit ermöglicht das automatische Einrichten der dünnen ProbenSchicht (1a) in die Objektebene (1).

### Anregungsstrahlengang:

### (Abb.2 und Abb.3)

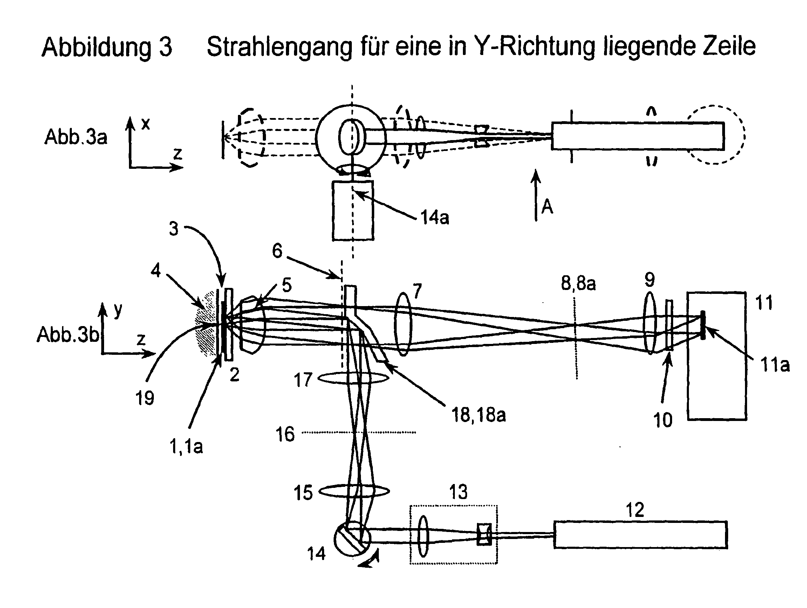

Abb. 2b, 3b sind Ansichten von Abb.2a,3a , jeweils in Richtung des Pfeiles A gesehen.
Als Lichtquelle dient ein Laser (12). Der Querschnitt des kollimierte Laserstrahls wird durch eine Aufweitungsoptik (13) vergrößert. Der aufgeweitet Strahl trifft auf den in der Pupille des Scanobjektivs (15) angebrachten Scanspiegel (14). Das Scan-Objektiv (15) fokusiert das vom Scanspiegel (14) umgelenkte Licht in die anregungsseitige Zwischenbildebene (16). Aus der Zwischenbildebene (16) wird das Licht von der Tubusoptik (17) aufgenommen und kollimiert. Über einen Spigel (18a) wird das Licht in das Objektiv (5) umgelenkt und von diesem in die Objektebene (1) fokusiert. In der Objektebene (1) entsteht auf diese Weise ein kleiner Anregungsfleck, der mit Hilfe des Scanspiegels (14) auf einer Linie hin und her bewegt werden kann.

Um einen für die gewünschte laterale Auflösung hinreichend kleinen Durchmesser (Durchmesser = 5µm) des Fokus zu erzeugen muß die ausgeleuchtete Apertur groß genug sein (NA=0,17).
Der Strahlquerschnitt des Lasers muß also durch die Aufweitungsoptik (13) ausreichend vergrößert werden.

Um den Anregungsfleck in der Objektebene(1) auf einer geraden Linie zu bewegen wird der Scanspiegel (14) um die zur Ebene des einfallenden und reflektierten Strahls senkrechte Achse (14a, in Abb.2 parallel zur Z-Richtung, in Abb.3 parallel zur x-Richtung) gekippt.
Zusammen mit einer linearen Bewegung der Probe senkrecht zur Bewegung des Anregungsflecks (Zeile) kann die gesamte Probenfläche abgetastet werden.

Das Scanobjektiv (15) und die Tubusoptik müssen so aufeinander abgestimmt sein, daß sich der Beleuchtungstrahl immer vollständig durch die Pupille (6) des Objektivs tritt und stets vollständig auf den Spiegel (18a) fällt.
Objektiv (5), Tubusoptik (17) und Scanobjektiv (15) genügen zusammen der F-Theta-Bedingung. Das heißt der Zusammenhang zwischen dem Winkel des Scanspiegels (14) und dem Ort des Fokus in der Objektebene ist linear.

Die Einspiegelung des Anregungslichtes in das Objektiv(5) erfolgt durch einen Spiegel(18a), der an der Blendenanordnung (18) befestigt ist.

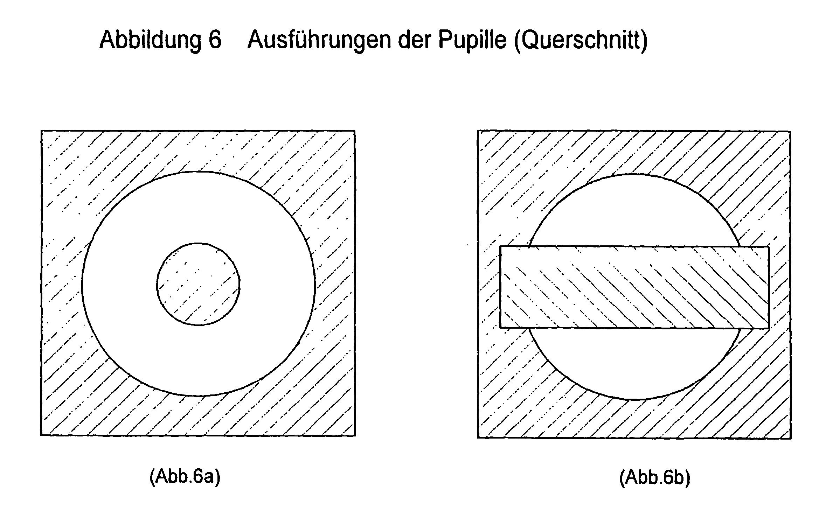

Durch die Fläche des Spiegels (18a) und der Blendenanordnung (18) wird nur ein Teil der Apertur des des Objektivs (5) ausgeblendet, so daß das von der Probe emittierte Licht am Spiegel (18a) und der Blendenanordnung (18) vorbei in das Projektiv (7) gelangen kann (siehe Abb. 6) und so den Detektor erreicht.

An der Oberfläche des Substrats (2) und an der Grenzfläche des Substrats (2) zur Flüssigkeit im Kanal (3) wird der Anregungsstrahl reflektiert. Der Einfallswinkel des Anregungsstrahls ist so gewählt, daß die reflektierten Bündel durch die streifenförmige Blendenanordnung (18) oder den Spiegel selbst aus dem Nachweisstrahlengang ferngehalten werden.

### Abb.4:

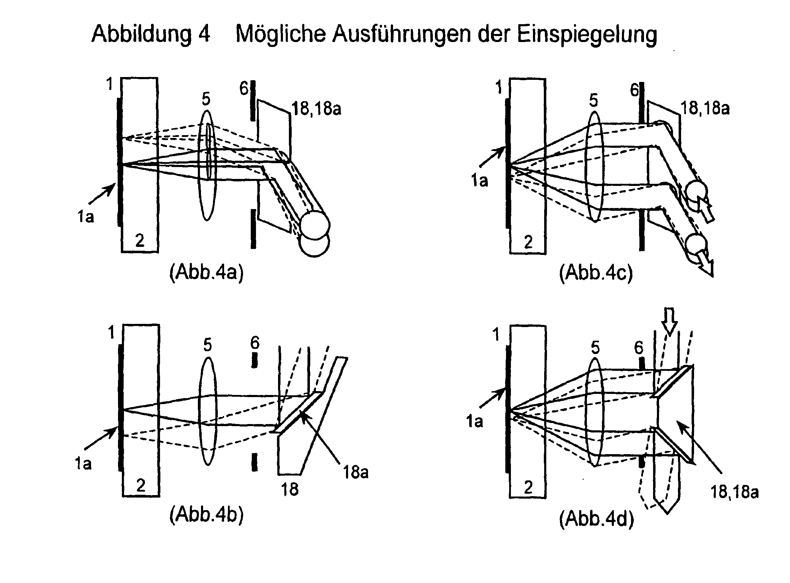

Mögliche Anordnungen der lichtundurchlässigen streifenförmigen Blende(18) und des von ihr gehaltenen Spiegels sind in den Abbildungen 4a-4d dargestellt. Abbildung 4a zeigt eine Anordnung für senkrechten telezentrischen Einfall des Anregungsstrahls auf die Probe, wobei die abgetastete Zeile in der gleichen Richtung wie der Anregungsstrahl (Y-Richung) vor der Einspiegelung liegt. Abbildung 4b zeigt ähnlich zu Abb.3 (18,18a) eine Anordnung für senkrechten Einfall des Anregungsstrahls auf die Probe, wobei die abgetastete Zeile senkrecht (X-Richtung) zu der des Anregungsstrahl vor der Einspiegelung liegt. Die Abbildungen 4c und 4d zeigen Anordnungen mit schrägem Einfall des Anregungsstrahls auf die Probe mit Entkopplung von einfallendem und reflektiertem Strahl wobei der Einfallswinkel so gewählt ist, daß die reflektierten Strahlen durch die streifenförmige Blende gestoppt, beziehungsweise aus dem Nachweisstrahlengang heraus reflektiert werden können.
Es besteht auch die Möglichkeit, die gesamten dargestellten Blenden als Spiegel auszubilden.

Das von der Substratoberfläche oder von der Grenzfläche zwischen Substrat und Flüssigkeit zurück reflektierte Anregungslicht kann, nachdem es aus dem Nachweisstrahlengang herausreflektiert wurde, auf einen Detektor gelenkt werden.
Die Leistung kann dann zu Referenz- oder Kalibrationszwecken gemessen werden.

### Nachweisstrahlengang:

### (Abb.2 und Abb.3)

Durch das Objektiv (5) und das Projektiv (7) im Nachweisstrahlengang wird die Objektebene (1) in die nachweisseitige Zwischenbildebene (8) abgebildet. Eine Spaltblende (8a) in der Zwischenbildebene (8) dient der Falschlichtunterdrückung. Eine Optik (9) vor dem Detektor (11) sorgt für eine homogene Beleuchtung der Detektorfläche (11a).
Direkt vor dem Detektor befindet sich ein Bandpaßfilter (10), der den nachzuweisenden Spektralberich definiert.

Das von der aktiven Schicht (1a) ausgehende Fluoreszenzlicht wird durch das Objektiv (5) gesammelt und kollimiert.
In der Pupillenebene (6) des Objektivs wird aus dem kollimierten Bündel ein Streifen ausgeblendet. Der Streifen liegt parallel zu der Linie auf der sich der Anregungsfleck bewegt und verläuft durch das Zentrum der Pupille (6).

Die Ausblendung des Streifens und die Einspiegelung des Anregungslichtes bei einer optischen Anordnung zum abscannen einer Linie muß nicht notwendigerweise in Pupille des Objektivs liegen. Eine Bewegung des Strahlbündels in der Ebene in der eingespiegelt wird parallel zur Richtung des ausgeblendeten Streifens ist zulässig und beeinträchtigt die wirkung der Ausblendung nicht..

Auf beiden Seiten des Streifens ist der Durchtritt durch die Pupille (6) frei, so das ein ausreichend großer Raumwinkel zur Detektion des Fluoreszenzlichts zur Verfügung steht.

Die Ausblendung eines Streifens hat zwei Funktionen:
a) Im Bereich der Ausblendung befindet sich die Einspiegelung (18) des Anergungslichts.
b) An der dem Substrat (2) mit der aktiven Schicht (1a) gegenüberliegenden Seite des Kanals (Kanalrückwand (4)) entsteht durch die Beleuchtung mit dem Anregungsstrahl Fluoreszenzlicht im nachzuweisenden Spektralbereich. Dieses Licht wird nicht durch den Bandpaßfilter (10) vor dem Detektor (11) unterdrückt. Da die Quelle dieses Lichts aufgrund der defokusierten Anregung ausgedehnt ist und sie nicht in der Objektebene (1) liegt, wird der größte Teil dieser Emission durch die Spaltblende (8a) in der Zwischenbildebene (8) gestoppt. Durch den in ausgeblendeten Streifen entsteht für dieses Licht zusätzlich ein Schattenbereich, der über dem Spalt (8a) in der Zwischenbildebene (8) liegt. Fluoreszenzlicht von der Kanalrückwand (4) kann nur noch indirekt, über die Streuung an den Komponenten des Strahlengangs auf die Detektorfläche (11a) gelangen.

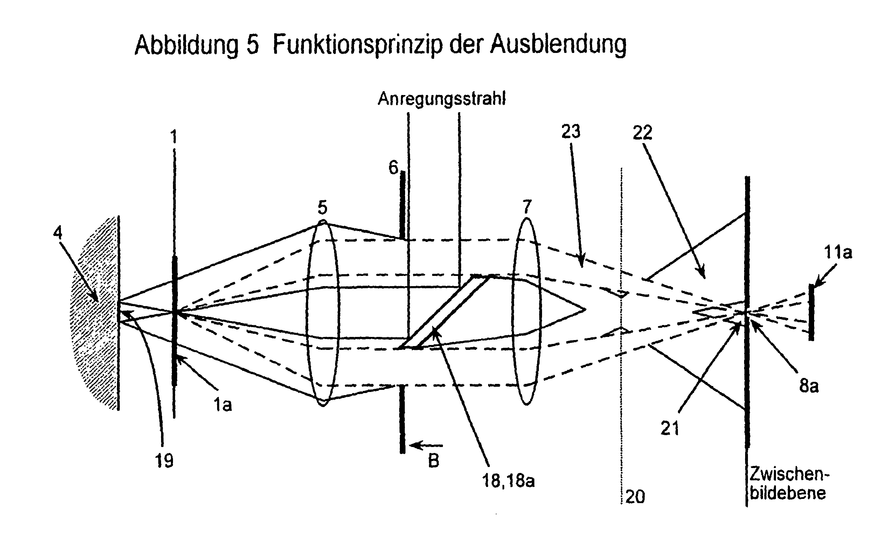

### Abb. 5 und 6: Funktionsprinzip der Ausblendung:

Die Abbildungen 5 und 6 illustrieren das Funktionsprinzip und zeigen mögliche Ausführungen der Blende.
Die Einspiegelung/ Ausblendung entspricht sinngemäß den in Abb.4a und 4b dargestellten Varianten.
Die Blickrichtung in Abb.4 entspricht einer Ansicht in Richtung des Pfeiles B in Abb.5.
Durch Ausblendungen ensteht für Licht, dessen Quelle räumlich beschränkt ist und die nicht in der Objektebene liegt ein Schattenbereich in der zur Objektebene konjugierten Bildebene. Der defokusierte Anregungsfleck (19) auf der Kanalrückwand (4) oder der Substratoberfläche ist eine solche Quelle für Falschlicht.

Idealerweise wird die Ausblendung (18) so groß gewählt, daß in der Bildebene (8) ein Kernschattenbereich (21) für das Falschlicht ensteht und die zum Anregungsfokus konfokale Blendenöffnung (8a) vollständig in diesem Kernschattenbereich (21) liegt. Falschlicht (22) aus dem Bereich des defokusierten Anregungsflecks in Ebenen, die hinreichend weit von der Objektebene entfernt sind kann dann nur noch indirekt durch Streuung an den Komponenten des Strahlengangs auf die Detektorfläche (11a) gelangen. Im Gegensatz dazu passiert das Nutzlicht (23) aus dem Bereich des fokusierten Anregungsstrahls in der Objektebene (1) die konfokale Blendenöffnung (8a) ungehindert und gelangt auf die Detektorfläche (11a).

Um eine gute Ausblendung des Falschlichtes (22) zu erzielen muß der Kernschattenbereich (21) hinreichend groß, in jedem Fall größer als die Öffnung der konfokalen Blende sein.

Das heißt im Falle eines Pinholes muß die ausgeblendete Apertur größer als die Apertur des Anregungsstrahlengangs sein.

Wenn die konfokale Blende als Spalt ausgeführt ist, muß die ausgeblendete Apertur in der Ebene senkrecht zum Spalt größer als die Apertur des Anregungsstrahlengangs sein. In der Ebene parallel zum Spalt muß die volle Apertur abgedeckt werden.

Bei einer Spaltbreite die dem zehnfachen des beugungsbegrenzten Spots in der Bildebene entspricht, muß die ausgeblendete sagittale Apertur 5 -10% größer als die Apertur des Anregungsstrahlengangs sein.

Abbildung 6 zeigt mögliche Formen der Ausblendung (18).

Abbildung 6a zeigt die Form der Ausblendung wenn sich das Bild des Anregungsflecks in der Bildebene (8) nicht bewegt. Das ist der Fall wenn die Probe nicht abgerastert werden soll oder wenn das Anregungslicht und das Nutzlicht durch den Scanspiegel (Abb.9 14) umgelenkt werden. In diesem Fall wird nur der zentrale Teil der Pupille ausgeblendet. Die konfokale Blende (8a) ist dann ein Pinhole.

Abbildung 6b zeigt wie Fig.5 die Form der Ausblendung wenn nur das Anregungslicht durch einen Scanspiegel (14) umgelenkt wird, der nur um eine Achse gekippt wird. Der ausgeblendete Streifen (18) muß parallel zu der Linie liegen, auf der der Anregungsfleck in der Objektebene hin und her läuft. Die Konfokale Blende (8a) ist dann als Spaltblende ausgeführt, deren Spalt ebenfalls parallel zur Bewegungsrichtung des Anregungsflecks in der Objektebene liegt.

## Patentansprüche

1. Scannende Anordnung zur Erfassung von Fluoreszenzlicht einer beleuchteten Probe (1a) mit mindestens einem Scanspiegel (14), einem Objektiv (5), einem in der Pupillenebene des Objektivs angeordneten Spiegel und einem Spalt (8a), wobei Anregungslicht über den mindestens einen Scanspiegel (14) und das Objektiv (5) und über den in der Pupillenebene des Objektives angeordneten Spiegel auf die Probe gelangt, **dadurch gekennzeichnet, dass** der Spiegel zumindest teilweise Teil einer streifenförmigen Blende (18) ist, die durch das Zentrum der Pupille verläuft und das Fluoreszenzlicht im wesentlichen an der Blende (18) vorbei über den Spalt (8a) in Richtung eines Detektors gelangt.

2. Anordnung nach Anspruch 1,wobei das Fluoreszenzlicht über eine Projektionsoptik (7) in Richtung des Detektors abgebildet wird.

3. Anordnung nach Anspruch 2,wobei in einer Zwischenbildebene der Projektionsoptik eine Spaltblende (8a) angeordnet ist und der Spalt parallel zu einer streifenförmigen. Blende (18) liegt.

## Claims

1. Scanning arrangement for detecting fluorescent light of an illuminated sample (1a), having at least a scanning mirror (14), an objective (5), a mirror arranged in the pupil plane of the objective, and a slit (8a), excitation light reaching the sample via the at least one scanning mirror (14) and the objective (5), and via the mirror arranged in the pupil plane of the objective, **characterized in that** the mirror is at least partially part of a strip-shaped diaphragm (18) which runs through the centre of the pupil, and the fluorescent light is substantially transmitted past the diaphragm (18) in the direction of a detector via the slit (8a).

2. Arrangement according to Claim 1, in which the fluorescent light is imaged in the direction of the detector by a projection optics (7).

3. Arrangement according to Claim 2, in which a slit diaphragm (8a) is arranged in an intermediate image plane of the projection optics, and the slit lies parallel to a strip-shaped diaphragm (18).

## Revendications

1. Dispositif de balayage pour la détection de la lumière fluorescente d'un échantillon éclairé (1a) avec au moins un miroir de balayage (14), un objectif (5), un miroir disposé dans le plan de la pupille de l'objectif et une fente (8a), dans lequel la lumière d'excitation arrive sur l'échantillon par l'intermédiaire d'au moins un miroir de balayage (14) et de l'objectif (5) et par l'intermédiaire du miroir disposé dans le plan de la pupille de l'objectif, **caractérisé en ce que** le miroir fait partie au moins partiellement d'un diaphragme (18) en forme de bande passant par le centre de la pupille, et que la lumière fluorescente se propage en direction d'un détecteur en passant pour l'essentiel à côté du diaphragme (18) à travers la fente (8a).

2. Dispositif selon la revendication 1, dans lequel la lumière fluorescente est reproduite en direction du détecteur par l'intermédiaire d'une optique de projection (7).

3. Dispositif selon la revendication 2, dans lequel un diaphragme à fente (8a) est disposé dans un plan image intermédiaire de l'optique de projection, et la fente est parallèle à un diaphragme (18) en forme de bande.
